# EUROPÄISCHE PATENTSCHRIFT

(11) **EP 3 152 507 B1**
(45) Veröffentlichungstag und Bekanntmachung des Hinweises auf die Patenterteilung: **17.10.2018**
(21) Anmeldenummer: 15728464.7
(22) Anmeldetag: 02.06.2015
(51) Int. Cl.: F27D 15/02

(54) **ROSTPLATTE FÜR EINEN ROSTKÜHLER**
GRATE PLATE FOR A GRATE COOLER
PLAQUE DE GRILLE POUR UN REFROIDISSEUR À GRILLE

(30) Priorität: 05.06.2014 DE 102014008010
(43) Veröffentlichungstag der Anmeldung: 12.04.2017
(73) Patentinhaber: KHD Humboldt Wedag GmbH, 51067 Köln (DE)
(72) Erfinder: SCHINKE, Karl, 50937 Köln (DE)
(86) Internationale Anmeldenummer: PCT/EP2015/062240
(87) Internationale Veröffentlichungsnummer: WO 2015/185542

(56) Entgegenhaltungen:
- CN-A- 101 995 163
- DE-U1- 29 807 161
- US-A1- 2013 130 188

## Beschreibung

Die Erfindung betrifft eine Rostplatte zum Einsatz in einem Schüttgutkühler für heißes Schüttgut, wie zum Beispiel heißer Zementklinker, aufweisend einen Arbeitsbereich mit mindestens einer Tasche zum Halten von Schüttgut als autogene Verschleißschutzschicht, mindestens einer Öffnung, die zur Unterseite der Rostplatte für die Einleitung von Kühlluft führt, wobei der Arbeitsbereich im Einsatz in einem Rostkühler einen Bereich aufweist, der alternierend von einer weiteren Rostplatte überdeckt wird.

Zum Kühlen von heißem Schüttgut, wie beispielsweise Zementklinkergranalien nach deren Austritt aus einem Drehrohrofen, ist es bekannt, das Schüttgut über einen Rostkühler zu transportieren und im Querstromverfahren Kühlluft durch die Schüttung des Schüttguts zu leiten. Zum Transportieren des Schüttguts sind verschiedene Transportverfahren bekannt. Den meisten Transportverfahren gemeinsam ist der Transport über bewegliche Elemente des Rostkühlers selbst. Da es bisher nicht gelungen ist, in befriedigender Weise mechanisch funktionale Elemente eines Förderbandes oder eines Taschentransportbandes in ausreichender Weise vor Abwärme mit hoher Temperatur und dem stark abrasiven und schleißenden Staub des Zementklinkers abzuschirmen, haben sich Rostkühler mit quer zur Bewegungsrichtung erstreckenden und in Transportrichtung hin- und her bewegenden Rosten als am besten geeignet herausgestellt. Diese vorstehend genannten Rostkühler weisen einen treppenähnlichen Aufbau auf, wobei die einzelnen Stufen des Rostkühlers abwechselnd fest und statisch und andere Roste in Transportrichtung hin und entgegen der Transportrichtung her beweglich sind. Auf dem Treppenrost liegendes Schüttgut wird durch die alternierenden Rostelemente jeweils auf den in Transportrichtung folgenden, statischen Rost geschoben. Dabei fällt das Schüttgut über die statischen Rostkanten hinweg, wenn weiteres Schüttgut nachgefördert wird. Die Transportrichtung wird dabei entweder durch die Schwerkraft bestimmt, wenn der Treppenrost ähnlich wie eine Treppe stets von einem zum nächsten Rost abwärts gerichtet ist, oder die Transportrichtung wird durch die Bewegungsart der Rostelemente bestimmt, wenn die einzelnen Rostplatten schräg, wie eine horizontal liegende Treppe angeordnet sind. Bei der Bewegung des abrasiven Schüttguts über die Rosteinzelelemente schleißt der heiße Zementklinker die Rostelemente. Durch die hohe Temperatur erweicht der Stahl der Rostelemente, wodurch der Schleiß noch verstärkt wird.

Um den Verschleiß der Rostelemente zu verringern, ist es bekannt, eine autogene Verschleißschutzschicht auf den Rostelementen vorzuhalten. Dabei wird ein Teil des abrasiven Zementklinkers in einer Tasche oder einer Vertiefung festgehalten, so dass der über die Rostelemente transportierte Zementklinker auf einer statischen Zementklinkerschicht hinweg transportiert wird. Durch den in den Taschen festgehaltenen Zementklinker findet keine unmittelbare Relativbewegung zwischen dem Zementklinker und der Oberfläche der Rostelemente statt. Des Weiteren dient die statische, abgekühlte Zementklinkerschicht in den Taschen als Wärmeisolation, so dass die Rostelemente bei geringerer Temperatur eine höhere Oberflächenhärte und somit höhere Widerstandsfähigkeit gegenüber Verschleiß aufweisen.

Um Kühlluft durch das heiße Schüttgut zu Fördern, wird in der Regel durch Öffnungen am Grund der Rostelemente Kühlluft geblasen. Die Kühlluft durchströmt sodann die heiße Zementklinkerschicht und nimmt dabei die Wärme des Zementklinkers auf. Um sogenannten Rostdurchfall des Zementklinkers mit einer Körnungsgröße von unterhalb von 1 mm bis hin zu größeren Brocken von bis zu 10 cm und mehr zu vermeiden, ist man bemüht, die Kühlluft durch mäanderförmige Kühlluftkanäle zu leiten. Die mäanderförmigen Kühlluftkanäle und die statische Zementklinkerschicht in den Taschen der Rostelemente bilden einen hohen Strömungswiderstand, wenn Kühlluft mit einem hohen Volumen pro Zeiteinheit in den Zementklinker eingeleitet werden muss. Der hohe Luftwiderstand hat hohe Energiekosten zur Erzeugung des Kühlluftstromes zur Folge, die nach Möglichkeit und zur Wirtschaftlichkeit der Zementklinkerkühlung vermieden werden sollten. Schließlich ist auch der Aufwand zur Herstellung der als Verschleißteil eingesetzten Rostplatten, die als Teil der Rostelemente in unmittelbarem Kontakt mit dem Zementklinker stehen, vergleichsweise hoch.

In der Europäischen Patentschrift EP 1 445 567 B1 ist eine Rostplatte offenbart, die aus gestanzten und gefalteten Profilstahlblechen besteht. Die Herstellung aus den Stanz- und Profilstahlblechen ist dabei noch vergleichsweise einfach herzustellen. Gleichwohl ist der Luftwiderstand der mäanderförmigen Rostplatte vergleichsweise hoch.

Aus der deutschen Offenlegungsschrift DE 24 54 202 A1 und der US 2013/0130188 A1 sind
eine Rostplatte zum Einsatz in einem Rostkühler bekannt, welche eine Arbeitsfläche und eine durch eine nächste Rostplatte bei der Bewegung der Rostplatten überdeckte Fläche aufweist. Die bei der Bewegung alternierend freiliegende und wieder überdeckte Rostplatte weist keine Durchtrittsöffnungen für Kühlluft auf, da in diesem Bereich ohnehin kein Schüttgut zu liegen kommt. Bei der Bewegung der Rostplatten schwankt somit der Gesamtluftwiderstand, der durch entsprechende Regelmechanismen in der Kühlluftzufuhr ausgeglichen werden muss, denn liegt der alternierend überdeckte Bereich frei, so ist bei alternierend einander überdeckenden Rostelementen weniger Fläche des Kühlers für den Durchtritt von Kühlluft vorhanden.

In der deutschen Offenlegungsschrift DE 42 05 534 A1 ist ein Rostelement offenbart, der in dem alternierend überdeckten Teil eine Kühlluftzufuhr von unten aufweist. Damit ist in diesem Bereich zwar keine Kühlung möglich, aber zumindest weist der unerwünscht ohne Funktion bleibende Teil der Rostplatte mit einer Funktion versehen.

Aus der Gebrauchsmusterschrift DE 20 2005 011 330 U1 ist eine anders Rostelement bekannt, welches aus einer Vielzahl von flügelartigen Elementen zusammengesetzt wird. Um den Verschleiß der Rostelemente zu verringern ist hier nicht vorgesehen, dass Schüttgut eine autogene Verschleißschutzschicht bildet, sondern durch einen dort genannten "Coanda"-Effekt solle das Schüttgut ähnlich wie auf einem sehr dünnen Luftkissen gehalten werden, wodurch die Reibung zwischen Schüttgut und Rostelement verringert würde.

Allen vorgenannten Lösungen ist gemeinsam, dass der Luftwiderstand vergleichsweise hoch ist, bei den meisten der Luftwiderstand im Einsatz der Rostelemente durch alternierendes Überdecken schwankt und dass die Rostplatten durch Zusammensetzen von Einzelelementen vergleichsweise aufwändig zu fertigen sind. Um den Verschleiß zu verringern ist bei vielen Ausführungsformen vorgesehen, den schleißenden Teil der Rostelemente mit hoher Wanddicke aufzubauen, was die Rostelemente verteuert und unnötig schwer macht.

Aufgabe der Erfindung ist es daher, eine Rostplatte zur Verfügung zu stellen, welche die Nachteile aus dem Stand der Technik überwindet, zumindest aber die nachteiligen Eigenschaften in verminderten Maße aufweist. Die der Erfindung zu Grunde liegende Aufgabe wird gelöst durch eine Rostplatte nach Anspruch 1. Weitere vorteilhafte Ausgestaltungen der Erfindung sind in den Unteransprüchen angegeben.

Die erfindungsgemäße Aufgabe wird also dadurch gelöst, auch der alternierend von einer weiteren Rostplatte überdeckte Bereich größtenteils durch die mindestens eine Tasche zum Halten von Schüttgut als autogene Verschleißschutzschicht abgedeckt ist, und dass die mindestens eine Öffnung, die zur Unterseite der Rostplatte für die Einleitung von Kühlluft führt, eine lichte Öffnung aufweist, die mindestens einen Durchmesser von 7 mm oder mehr aufweist. Weitere vorteilhafte Ausgestaltungen sind in den Unteransprüchen zu Anspruch 1 angegeben.

Nach der Erfindung ist vorgesehen, dass auch der im Betrieb durch eine weitere Rostplatte alterierend überdeckte Bereich zumindest zum größten Teil mit einer autogenen Verschleißschutzschicht versehen ist, die in der mindestens einen Tasche gehalten wird. Es ist aber nicht nur vorgesehen, dass der größte Teil der im Betrieb durch eine weitere Rostplatte alternierend überdeckte Bereich eine Tasche zur Aufnahme des als autogener Verschleißschutzschicht wirkenden Schüttung aufweist, sondern auch, dass auch der Boden der mindestens einen Tasche im Bereich, der alternierend durch eine weitere Rostplatte abgedeckt wird, eine Öffnung zur Einleitung von Kühlluft aufweist. Nach der Theorie zur Berechnung des Luftwiderstands von heißem Schüttgut wäre es zu erwarten, dass der Teil des Arbeitsbereiches, der stets frei bleibt, und heißen Zementklinker trägt einen höheren Luftwiderstand aufweist als der Teil der Rostplatte, der im Betrieb durch eine weitere Rostplatte alternierend überdeckt wird und nur kurzzeitig mit heißem Schüttgut bedeckt ist. Der plötzliche Temperaturanstieg der Kühlluft im Bereich des heißen Klinkers führt nämlich zu einer starken Luftausdehnung, wodurch sich der Luftdruck und die Luftgeschwindigkeit im Schüttgut erhöhen. Der Teil des Arbeitsbereiches, der regelmäßig und wiederkehrend von einer weiteren Rostplatte überdeckt wird, sollte demnach wegen der geringeren Temperatur einen geringeren Luftwiderstand aufweisen und daher einen Kaltkanal bilden. Überraschenderweise hat sich aber gezeigt, dass diese Betrachtung dem Anschein nach nur für sehr dicke oder sehr homogen verteilte Schüttungen auf einem Schüttgutkühler zutrifft. Durch den Einsatz der erfindungsgemäßen Rostplatten unterbleibt ein rhythmisches Anschwellen der geregelten Verdichterleistung. Bei nicht geregelten Verdichtern ist das typische, alternierende Geräusch der zischenden Kühlluft, die unter dem Knirschen des vorwärtsgeförderten Zementklinkers zu hören ist, weitaus geringer bis gar nicht mehr wahrnehmbar. Eine Luftdruckmessung in der Kammer unterhalb des Kühlers zeigt Schwankungen, die nicht mehr einhergehen mit dem regelmäßigen Hub der Rostkühlerplatten. Dieser gleichmäßigere Betrieb mit geringerem Luftwiderstand führt zu einem geringeren Stromverbrauch für die Verdichter.

Ein weiterer zu erwartender Nachteil der Lüftungsöffnungen in dem Bereich der Rostplatte, der im Betrieb regelmäßig von einer weiteren Rostplatte überdeckt wird, könnte eine Abkühlung der Kühlerabluft durch Falschlufteintrag sein. Erwartungsgemäß gelangt diese Falschluft über die Öffnungen in dem Bereich, der im Betrieb regelmäßig von einer weiteren Rostplatte überdeckt wird, in den Schüttgutkühler oberhalb der zu kühlenden Schüttung. Auch hier konnte nicht nachgewiesen werden, dass die Ablufttemperatur merklich geringer würde, was einer Rekuperation der Wärme im Zementklinker abträglich wäre. Man ist bemüht, die Wärme aus dem Zementklinker mit möglichst hoher Temperatur wiederzugewinnen und in den Herstellungsprozess zurückzuführen.

Von besonderer Bedeutung ist die Größe der Öffnungen, die mindestens eine lichte Öffnung von 7 mm Durchmesser aufweisen soll. Durch eine so große Öffnung wird bewusst ein anfänglicher Rostdurchfall in Kauf genommen. Es rieselt solange Zementklinker durch die großen Öffnungen, bis sich eine stabile Schüttung aus groben Zementklinkergranalien in der mindestens einen Tasche ausbildet, deren Zwischenräume durch stets kleiner werdende Zementklinkergranalien verdeckt werden. Die große Öffnung erlaubt einen Luftdurchtritt mit vergleichsweise geringem Luftwiderstand.

In bevorzugter Ausführungsform der Erfindung ist vorgesehen, dass die Maschenweite der mindestens einen Tasche mindestens 20 mm sowohl in der Länge als auch in der Breite beträgt, und die Maschenweite der mindestens einen Tasche höchstens 150 mm sowohl in der Länge als auch in der Breite beträgt. Unter dem Begriff "Maschenweite" wird eine wiederkehrende Öffnungsweite von mehr als einer nebeneinander angeordneten Tasche verstanden. Bei einer Vielzahl von Taschen sollten die einzelnen Taschen vergleichsweise klein sein und 20 mm sowohl in der Länge als auch in der Breite betragen und das Maß von 150 mm nicht übersteigen. Durch die Kombination der geringen Maschenweite mit den größeren Öffnungen für den Kühllufteintritt wird eine schnelle Ausbildung einer stabilen Schüttung in den Taschen erreicht, die schon unmittelbar nach dem Befüllen keinen oder einen nur geringen Rostdurchfall zeigt. Die kleinen Maschen helfen, im Betrieb die Schüttung stabil zu halten, so dass diese nicht durch die alternierende Hubbewegung des Rostkühlers stets neu aufgebaut werden muss, wobei mit jedem Hub immer wieder anfänglicher Rostdurchfall hinzunehmen wäre.

Die Höhe der mindestens einen Tasche sollte mindestens 20 mm und höchstens 100 mm betragen. Die Maße der Tasche sind dabei abhängig von der Größe der Zementklinkergranalien, die zu kühlen sind. Bei dem bekannten Verfahren zur Herstellung von Zementklinker mit Sinterung des Zementklinkers in einem Drehrohrofen ist die hier vorgestellte Größe der Taschen ein gutes Maß für einen Kompromiss zwischen unerwünschtem Rostdurchfall, der regelmäßig unter dem Schüttgutkühler entfernt werden muss und einem geringen Luftwiderstand, er zu geringen Stromkosten beim Betrieb der Anlage zur Herstellung von Zement führt.

Um den anfänglich hinzunehmenden Rostdurchfall zu verringern kann vorgesehen sein, dass die mindestens eine Öffnung im Einsatzzustand der Rostplatte unter einem Winkel zur vertikalen in den Boden eingebracht ist. In den angewinkelten Kanälen verfangen sich größere Zementklinkergranalien leichter und bilden daher eine Barriere für nachrieselndes Schüttgut.

Auch die erfindungsgemäße Rostplatte ist nicht ganz frei von Verschleiß. Insbesondere die oberen Wandteile der Taschen, die dem heißen Zementklinker direkt ausgesetzt sind, neigen zu höherem Verschleiß. Daher ist in bevorzugter Ausführungsform der Erfindung vorgesehen, dass mindestens eine sich zwischen zwei Taschen ausbildende Wand in der vertikalen Richtung geteilt ist. Durch die Teilung lässt ist die Rostplatte in einen oberen, dem Verschleiß ausgesetzten Teil und einen unteren, den Verschleiß weniger ausgesetzten Teil zu trennen. Bei der regelmäßigen Wartung und Austausch der Verschleißteile kann der obere Teil der Rostplatten abgenommen und ausgetauscht werden, wodurch sich die Kosten für Ersatzteile reduzieren. Um die Standzeit der Rostplatte noch weiter zu erhöhen, kann vorgesehen sein, dass mindestens eine sich zwischen zwei Taschen ausbildende Wand auf der zum Schüttgut weisenden Seite eine Verschleißschutzschicht, bevorzugt eine Auftragsschweißung oder eine Wolframcarbidschicht aufweist.

Die Rostplatten weisen im Betrieb zu der in Förderrichtung weisenden Seite der sich bewegenden Rostplatten eine sogenannte "Förderkante" auf, die den heißen Zementklinker in Transportrichtung schiebt. Es ist zum leichteren Austausch der Verschleißteile in bevorzugter Ausführungsform der Erfindung vorgesehen, dass die Rostplatte eine austauschbare Schubkante aufweist.

Die Erfindung wird anhand der folgenden Figuren näher erläutert. Es zeigt:
- Fig. 1: eine perspektivische Ansicht einer erfindungsgemäßen Rostplatte mit eingeblendeter Schnittebene A,
- Fig. 2: mehrere Rostplatten aus Figur 1 zusammengefügt zu einer Treppenroststufe,
- Fig. 3: ein Schnitt durch die Rostplatte aus Figur 1 gemäß Schnittebene A,
- Fig. 4: Rostplatte aus Fig. 3 mit vertikal geteilten Wänden
- Fig. 5: Rostplatte aus Fig. 3 in gefülltem Zustand,
- Fig. 6: Rostplatte mit angesetzter Platte.

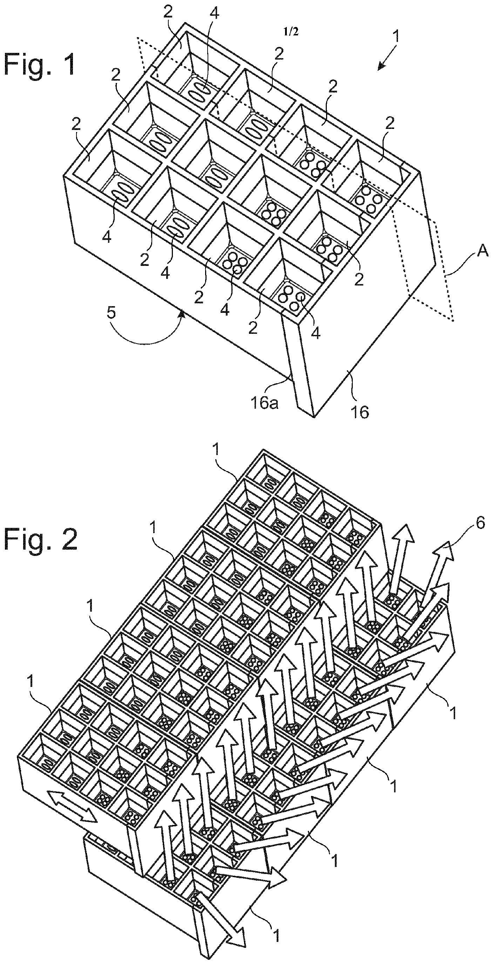

In **Figur** 1 ist eine erfindungsgemäße Rostplatte 1 abgebildet mit mehreren Taschen 2 zum Halten von Schüttgut 3 als autogene Verschleißschutzschicht und in welcher in je einer Tasche mehr als eine Öffnung 4, die zur Unterseite 5 der Rostplatte 1 für die Einleitung von Kühlluft 6 führt, vorhanden ist. Anders als bei gattungsgemäßen Rostplatten ist hier vorgesehen, dass der gesamte Arbeitsbereich 7 durch die mindestens eine Tasche 2 zum Halten von Schüttgut 3 als autogene Verschleißschutzschicht abgedeckt ist, und dass die mindestens eine Öffnung 4, die zur Unterseite 5 der Rostplatte für die Einleitung von Kühlluft 6 führt, eine lichte Öffnung aufweist, die mindestens einen Durchmesser von 7 mm oder mehr aufweist. Diese im Vergleich zu bekannten Rostplatten recht großen Durchmesser der Öffnung, die nicht als mäanderförmiger Kühlluftkanal ausgebildet ist, ermöglicht einen Kühlluftdurchtritt mit einem verhältnismäßig geringem Kühlluftwiderstand. Es ist nach der Erfindung vorgesehen, einen gewissen Rostdurchfall billigend in Kauf zu nehmen, wobei der Rostdurchfall schon recht schnell durch sich in den Öffnungen 4 fest setzende Zementklinkergranalien 10 gestoppt wird. Der hintere Bereich 11 der Rostkühlerplatte ist im Betrieb eines Rostkühlers alternierend von weiteren Rostplatten überdeckt. Dennoch ist nach der Erfindung vorgesehen, auch diesen Bereich mit einer autogenen Verschleißschutzschicht in den Taschen 2 auszustatten und dort auch Öffnungen für den Durchtritt von Kühlluft 6 vorzusehen. Um die dem Verschleiß stark ausgesetzte Schubkante 16 auswechseln zu können, ist in Ausgestaltung der erfindungsgemäßen Rostplatte 1 vorgesehen, dass diese eine austauschbare Schubkante 16 aufweist, wobei die Austauschbarkeit an der Stoßkante 16a in der Skizze zu erkennen ist.

In **Figur 2** ist dargestellt, wie sich eine erste, obere Reihe von identischen Rostplatten 1 über eine weitere, statische, zweite Reihe von Rostplatten 1 zum Fördern von darauf liegendem und hier nicht abgebildetem Schüttgut schiebt. Dabei ist der Arbeitsbereich unterteilt in einen Bereich, der stets dem Schüttgut 3 zugewandt ist und einen Bereich, der alternierend von den Rostplatten überdeckt wird.

Die Taschen 2 haben vergleichsweise geringe Abmessungen. Es ist vorgesehen, dass die Maschenweite der mindestens einen Tasche 2 mindestens 20 mm sowohl in der Länge als auch in der Breite beträgt, und die Maschenweite der mindestens einen Tasche 2 höchstens 150 mm sowohl in der Länge als auch in der Breite beträgt.

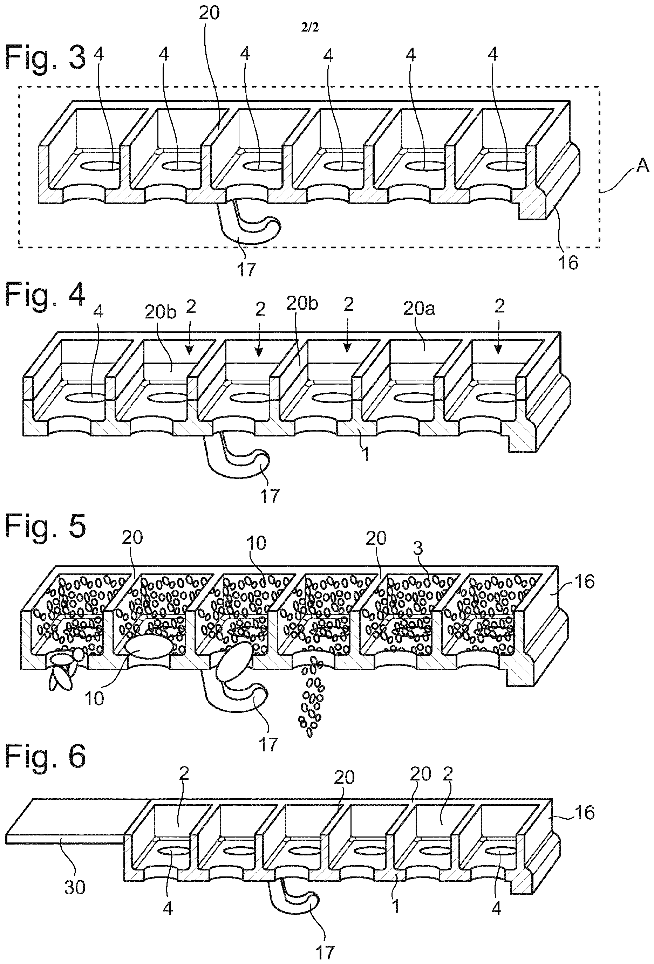

In **Figur 3** ist schließlich ein Schnitt A durch die Rostplatte 1 aus Figur 1 dargestellt, wobei die Rostplatte hier eine etwas geringere Höhe aufweist. Die Öffnungen 4 am Grund der Taschen 2 sind in dieser Ausführungsform nicht gegen Rostdurchfall gesichert, wobei sich in den Öffnungen nach kurzer Zeit Zementklinkergranalien sammeln und von selbst so einen Schutz vor Rostdurchfall bilden. Ein stabiler Haken 17 im hinteren Bereich der Rostplatte 1 dient zur Befestigung in einem Rostplattenkühler, der mit diesen Rostplatten 1 ausgestattet ist.

In **Figur 4** ist dargestellt, wie nach einer anderen Ausführungsform der Erfindung die Wände 20 vertikal geteilt sind in eine austauschbare obere Wand 20a und eine untere Wand 20b. Bei der regelmäßigen Wartung können die oberen Teile der Wände 20 abgenommen und ausgetauscht werden, um die dem Schüttgut zugewandten und verschlissenen Wände 20 wieder aufzubauen.

In **Figur 5** ist schließlich skizzenhaft dargestellt, wie die Rostplatte 1 Taschen 2 aufweist, die mit feinem Schüttgut 3 als autogene Verschleißschutzschicht gefüllt sind. Ohne eine besondere Sicherung würde die autogene Verschleißschutzschicht aus den Taschen 2 durch die Öffnungen 4 herausrieseln. Dies passiert aber nur solange, bis sich eine größere Zementklinkergranalie 21 in den Öffnungen 3 festgesetzt hat.

In Figur ist schließlich ein Schnitt durch eine Rostplatte 1 entlang der Schnittebene A aus Figur 1 dargestellt, wobei diese Rostplatte eine Platte 30 als Verlängerung aufweist, die für die weitere Montage in der Mechanik des Rostkühlers gedacht ist. Der Bereich der Platte ist als Teil der Arbeitsfläche jedoch nicht dem Schüttgut ausgesetzt, weil sie stets durch weitere Rostplatten 1 auch bei deren Hubbewegung überdeckt bleibt.

**BEZUGSZEICHENLISTE**

| | | | |
|---|---|---|---|
| 1 | Rostplatte | 16 | Schubkante |
| 2 | Tasche | 16a | Stoßkante |
| 3 | Schüttgut | 17 | Haken |
| 4 | Öffnung | | |
| 5 | Unterseite | 20 | Wand |
| 6 | Kühlluft | 20a | obere Wand |
| | | 20b | untere Wand |
| 10 | Zementklinkergranalie | 21 | Zementklinkergranalie |
| 11 | hintere Bereich | | |
| | | 30 | Platte |

## Patentansprüche

1. Rostplatte (1) zum Einsatz in einem zum Transportieren von Schüttgut durch Hubbewegung alternierend aus statischen Treppenroststufen sowie aus in und gegen die Transportrichtung beweglichen Treppenroststufen aufgebauten Schüttgutkühler für heißes Schüttgut (3), wie zum Beispiel heißer Zementklinker, aufweisend
einen aus einem ersten Bereich und einem zweiten Bereich bestehenden Arbeitsbereich,
wobei der erste Bereich gegeben ist als derjenige Teil des Arbeitsbereichs, der im Betrieb in dem Schüttgutkühler alternierend von einer weiteren Rostplatte (2) überdeckt wird, und der zweite Bereich gegeben ist als derjenige Teil des Arbeitsbereichs, der im Betrieb in dem Schüttgutkühler nicht von einer weiteren Rostplatte (2) überdeckt wird, und
wobei der Arbeitsbereich
- mindestens eine Tasche (2) zum Halten von Schüttgut (3) als autogene Verschleißschutzschicht, und
- in dem zweiten Bereich mindestens eine Öffnung (4), die zur Unterseite (5) der Rostplatte (1) für die Einleitung von Kühlluft (6) führt, aufweist,
**dadurch gekennzeichnet, dass**
- der gesamte Arbeitsbereich durch die mindestens eine Tasche (2) zum Halten von Schüttgut (3) als autogene Verschleißschutzschicht abgedeckt ist,
- der Boden der mindestens einen Tasche (2) im ersten Bereich mindestens eine Öffnung (4), die zur Unterseite (5) der Rostplatte (1) für die Einleitung von Kühlluft (6) führt, aufweist, und
- dass im ersten Bereich und im zweiten Bereich die mindestens eine Öffnung (4), die zur Unterseite (5) der Rostplatte (1) für die Einleitung von Kühlluft (6) führt, eine lichte Öffnung (4) aufweist, die mindestens einen Durchmesser von 7 mm oder mehr aufweist.

2. Rostplatte nach Anspruch 1,
**dadurch gekennzeichnet, dass**
die Maschenweite der mindestens einen Tasche (2) mindestens 20 mm sowohl in der Länge als auch in der Breite beträgt, und
die Maschenweite der mindestens einen Tasche (2) höchstens 150 mm sowohl in der Länge als auch in der Breite beträgt.

3. Rostplatte nach Anspruch 1 oder 2,
**dadurch gekennzeichnet, dass**
die Höhe der mindestens einen Tasche (2) mindestens 20 mm und höchstens 100 mm beträgt.

4. Rostplatte nach einem der Ansprüche 1 bis 3,
**dadurch gekennzeichnet, dass**
mindestens eine sich zwischen zwei Taschen (2) ausbildende Wand (20) in der vertikalen Richtung geteilt ist.

5. Rostplatte nach einem der Ansprüche 1 bis 4,
**dadurch gekennzeichnet, dass**
diese eine austauschbare Schubkante (16) aufweist.

6. Rostplatte nach einem der Ansprüche 1 bis 5,
**dadurch gekennzeichnet, dass**
dass die mindestens eine Öffnung (2) im Einsatzzustand der Rostplatte (1) unter einem Winkel zur vertikalen in den Boden eingebracht ist.

7. Rostplatte nach einem der Ansprüche 1 bis 6,
**dadurch gekennzeichnet, dass**
mindestens eine sich zwischen zwei Taschen (2) ausbildende Wand (20) auf der zum Schüttgut weisenden Seite eine Verschleißschutzschicht, bevorzugt eine Auftragsschweißung oder eine Wolframcarbidschicht aufweist.

## Claims

1. Grate plate (1) for use in a bulk material cooler, which for transporting bulk material by stroke movement is constructed alternately from static staircase-type grate steps and from staircase-type grate steps which are movable in and counter to the transport direction, for hot bulk material (3), such as for example hot cement clinker, having
a working region which is composed of a first region and a second region,
wherein the first region is provided as that part of the working region which, during operation in the bulk material cooler, is alternately covered by a further grate plate (2), and the second region is provided as that part of the working region which, during operation in the bulk material cooler, is not covered by a further grate plate (2), and
wherein the working region has
- at least one pocket (2) for holding bulk material (3) as an autogenous wear protection layer,
- at least one opening (4) in the second region which leads to the underside (5) of the grate plate (1) for the introduction of cooling air (6),
**characterized in that**
- the entire working region is covered by the at least one pocket (2) for holding bulk material (3) as an autogenous wear protection layer,
- the base of the at least one pocket (2) has, in the first region, at least one opening (4) which leads to the underside (5) of the grate plate (1) for the introduction of cooling air (6), and
- **in that**, in the first region and in the second region, the at least one opening (4) which leads to the underside (5) of the grate plate (1) for the introduction of cooling air (6) has a clear opening (4) which has at least a diameter of 7 mm or greater.

2. Grate plate according to Claim 1,
**characterized in that**
the mesh size of the at least one pocket (2) amounts to at least 20 mm both in length and in width, and
the mesh size of the at least one pocket (2) amounts to at most 150 mm both in length and in width.

3. Grate plate according to Claim 1 or 2,
**characterized in that**
the height of the at least one pocket (2) amounts to at least 20 mm and at most 100 mm.

4. Grate plate according to one of Claims 1 to 3,
**characterized in that**
at least one wall (20) formed between two pockets (2) is split in the vertical direction.

5. Grate plate according to one of Claims 1 to 4,
**characterized in that**
said grate plate has an exchangeable pushing edge (16) .

6. Grate plate according to one of Claims 1 to 5,
**characterized in that**
the at least one opening (2) is, in the usage state of the grate plate (1), formed into the base at an angle with respect to the vertical.

7. Grate plate according to one of Claims 1 to 6,
**characterized in that**
at least one wall (20) formed between two pockets (2) has, on the side facing toward the bulk material, a wear protection layer, preferably a weld cladding or a tungsten carbide layer.

## Revendications

1. Plaque de grille (1) à utiliser dans un refroidisseur de matières en vrac pour le transport de matières en vrac par un mouvement de levage, composé en alternance d'étapes de grilles à gradins statiques ainsi que d'étapes de grilles à gradins mobiles dans la direction de transport et inversement pour des matières en vrac chaudes (3), comme par exemple du clinker de ciment chaud, présentant
une zone de travail composée d'une première région et d'une deuxième région,
dans laquelle la première région est indiquée comme étant la partie de la zone de travail qui, dans le fonctionnement dans le refroidisseur de matières en vrac, est recouverte en alternance par une autre plaque de grille (2), et la deuxième région est indiquée comme étant la partie de la zone de travail qui, dans le fonctionnement dans le refroidisseur de matières en vrac, n'est pas recouverte par une autre plaque de grille (2), et
dans laquelle la zone de travail présente
- au moins une poche (2) pour retenir de la matière en vrac (3) comme couche de protection autogène contre l'usure, et
- dans la deuxième région au moins une ouverture (4) qui conduit vers le côté inférieur (5) de la plaque de grille (1) pour l'introduction d'air de refroidissement (6),
**caractérisée en ce que**
- toute la zone de travail est recouverte par au moins une poche (2) pour retenir de la matière en vrac (3) comme couche de protection autogène contre l'usure,
- le fond de ladite au moins une poche (2) présente dans la première région au moins une ouverture (4), qui conduit vers le côté inférieur (5) de la plaque de grille (1) pour l'introduction d'air de refroidissement (6), et
- dans la première région et dans la deuxième région, ladite au moins une ouverture (4), qui conduit vers le côté inférieur (5) de la plaque de grille (1) pour l'introduction d'air de refroidissement (6), présente une ouverture libre (4) qui présente au moins un diamètre de 7 mm ou plus.

2. Plaque de grille selon la revendication 1, **caractérisée en ce que** l'ouverture de maille de ladite au moins une poche (2) vaut au moins 20 mm aussi bien en longueur qu'en largeur et l'ouverture de maille de ladite au moins une poche (2) vaut au plus 150 mm aussi bien en longueur qu'en largeur.

3. Plaque de grille selon la revendication 1 ou 2, **caractérisée en ce que** la hauteur de ladite au moins une poche (2) vaut au moins 20 mm et au plus 100 mm.

4. Plaque de grille selon l'une quelconque des revendications 1 à 3, **caractérisée en ce qu'**au moins une paroi (20) se formant entre deux poches (2) est divisée en direction verticale.

5. Plaque de grille selon l'une quelconque des revendications 1 à 4, **caractérisée en ce que** celle-ci présente un bord de poussée remplaçable (16).

6. Plaque de grille selon l'une quelconque des revendications 1 à 5, **caractérisée en ce que** ladite au moins une ouverture (2) dans l'état d'utilisation de la plaque de grille (1) est pratiquée dans le fond sous un angle par rapport à la verticale.

7. Plaque de grille selon l'une quelconque des revendications 1 à 6, **caractérisée en ce qu'**au moins une paroi (20) se formant entre deux poches (2) présente sur le côté tourné vers les matières en vrac une couche de protection contre l'usure, de préférence une soudure par rechargement ou une couche de carbure de tungstène.
